# EUROPEAN PATENT APPLICATION

(11) **EP 0 681 286 A2**
(43) Date of publication of application: **08.11.1995**
(21) Application number: 95302468.4
(22) Date of filing: 12.04.1995
(51) Int. Cl.: G11B 5/39, G01R 33/09

(54) **Dual element magnetoresistive sensor**

(30) Priority: 21.04.1994 US 230674
(71) Applicant: International Business Machines Corporation, Armonk, N.Y. 10504 (US)
(72) Inventor: Gill, Hardayal Singh, Portola Valley, California 94028 (US); Pinarbasi, Mustafa, Morgan Hill, California 95037 (US)
(74) Representative: Davies, Simon Robert

(57) **Abstract**

A sensor (10) is disclosed comprising two MR elements (MR₁,MR₂) separated by a high resistivity conductive spacer material (16). A layer of hard bias material (26), which abuts one of the MR elements (MR₂) at each of its track edges, has a magnetization times thickness value substantially matched to that of the one MR element to bias it in one longitudinal direction. An exchange bias layer (20) biases the other MR element (MR₁) by exchange coupling in an opposite longitudinal direction to achieve magnetic stabilization between the MR elements. The exchange bias layer abuts the other MR element at each of its track edges and has a magnetization times thickness value substantially matched to that of the other MR element. Alternatively, the exchange bias layer extends from one track edge to an opposite track edge in continuous underlying or overlying contact with the other MR element.

## Description

This invention relates to a dual element magnetoresistive (MR) sensor.

The advantages of dual element MR sensors have been discussed extensively in U.S. patents 4,987,509 and 5,084,794.

U.S. Patent 5,084,794 discloses an MR sensor comprising two substantially identical MR elements separated by an insulating spacer layer except for conductive end strips that electrically short the MR elements. The shorted MR elements split a current applied thereto into two equal currents that flow in the same direction through the elements. These equal currents provide bias and also constitute sense currents for detecting element resistance change. No sense current is shunted through the insulating spacer layer. Since the identical elements have the same resistance, no voltage difference will be generated if an electrical short should occur with the result that any short circuits between the MR elements will not interfere with detection of recorded signals. However, since this sensor is unshielded, the thickness of the gap between the MR elements is critical. The insulating layer must be relatively thick, and the conductive strip must contact only a small area of both elements. This renders the sensor unacceptable for narrow track width applications. Also, there is no teaching of how to stabilize the opposing magnetic fields generated by the currents applied via the leads to the MR elements, which fields tend to destabilize the magnetic state of the MR elements.

U.S. Patent 4,987,509 discloses a shielded MR sensor comprising a pair of MR elements separated by thin dielectric material. Sense conductors contact the proximate one ends of the elements for transmitting externally generated sense currents thereto. A common conductor is disposed between and contacts the proximate opposite ends of the elements for electrically shorting these elements and providing a return path for the sense currents. The field from the common conductor is in the same direction as fields from the sense conductors to stabilize the magnetic state of the MR elements. However, this arrangement requires at least three connections (the two sense conductors and a common conductor) to achieve the stabilization. Moreover, inserting the common conductor between the MR elements complicates the fabrication process.

Other prior art of interest includes commonly assigned U.S. Patent 5,079,035 which discloses an MR sensor with hard magnetic bias layers that provide contiguous junctions having electrical and magnetic continuity with opposite ends of a single MR element. Also, a paper entitled "Exchange Anisotropy In Coupled Films of Ni₈₁Fe₁₉ with NiO and CoₓNi₁₋ₓO" published at p. 3060 et seq. of Appl. Phys. Lett60, 15 June 1992, discusses the use of NiO for exchange coupling.

In a dual element MR sensor, it is important to ensure magnetic stability of the two MR elements in order to provide proper functioning of the head. Since the MR elements can switch among a plurality of magnetic states, fluctuations in amplitude and asymmetry can occur. There is a need to achieve magnetic stability in a dual element MR sensor with or without magnetic shields that (1) is suitable for narrow track width applications, (2) has an improved configuration which minimizes the possibility of electrical shorting at the air bearing surface and/or shorting between the MR elements that could degrade performance by increasing sensitivity to common mode noise and provides abutting junctions for track edge definition, and (3) simplifies manufacturability.

Accordingly, the present invention provides a dual element magnetoresistive (MR) sensor comprising: two MR elements separated by a high resistivity conductive spacer layer; a hard bias layer abutting one of said MR elements at each of its track edges and having a magnetization times thickness value substantially matched to that of said one MR element to bias said one MR element in one longitudinal direction; and an exchange bias layer in contact with the other of said MR elements to bias by exchange coupling said other MR element in an opposite longitudinal direction to achieve magnetic stabilization between said MR elements.

In an embodiment, a dual element magnetoresistive (MR) sensor comprises a central active region separating two passive end regions. The central region comprises a pair of MR elements separated by a high resistivity conductive spacer layer.

According to one embodiment, each passive region comprises (i) a hard bias layer which abuts a respective track edge of one of the MR elements and has a magnetization times thickness value at least equal to that of the one MR element for biasing the latter in one longitudinal direction; and (ii) a ferromagnetic layer which has a magnetization times thickness value at least equal to that of the other MR element for biasing, by exchange coupling, the latter substantially in an opposite longitudinal direction to achieve magnetic stabilization between the MR elements.

Alternatively, the hard bias layer may be replaced by a ferromagnetic layer that abuts the one MR element at each of its track edges and has a magnetization times thickness value matched to that of the one MR element to bias it, by exchange coupling, in said one longitudinal direction.

A further embodiment provides a dual element magnetoresistive (MR) sensor comprising: two MR elements separated by a high resistivity conductive spacer layer; an exchange bias layer abutting one of said MR elements at each of its track edges and having a magnetization times thickness value matched to that of said one MR element to bias by exchange coupling said one MR element in one longitudinal direction; and an exchange bias layer abutting the other of said MR elements at each of its track edges and having a magnetization times thickness value matched to that of said other MR element to bias by exchange coupling said other MR element in an opposite longitudinal direction, thereby to achieve magnetic stabilization between said MR elements.

According to another embodiment, a dual element MR sensor comprises a central active region having (i) a pair of MR elements separated by a high resistivity conductive spacer layer, and (ii) an exchange bias layer in continuous underlying or overlying contact with one of the MR elements for biasing it, by exchange coupling, substantially in one longitudinal direction. Each passive end region comprises a hard bias layer abutting the other MR element and having a magnetization times thickness value at least equal to that of the other MR element for biasing it in an opposite longitudinal direction to achieve magnetic stabilization between the MR elements.

An embodiment of the present invention will now be described, by way of example only, with reference to the accompanying drawings in which:

Fig. 1 is a schematic view of an MR sensing system showing an end view of one embodiment of an MR sensor embodying the invention, as viewed from the air bearing surface (ABS) of a disk file.

Fig. 2 is an end view of an embodiment of an MR sensor constituting a modification of that depicted in Fig. 1.

Fig. 3 is an end view of another embodiment of an MR sensor embodying the invention, as viewed from the air bearing surface (ABS) of a disk file.

Fig. 4 is an end view of an embodiment of an MR sensor constituting a modification of that depicted in Fig. 3.

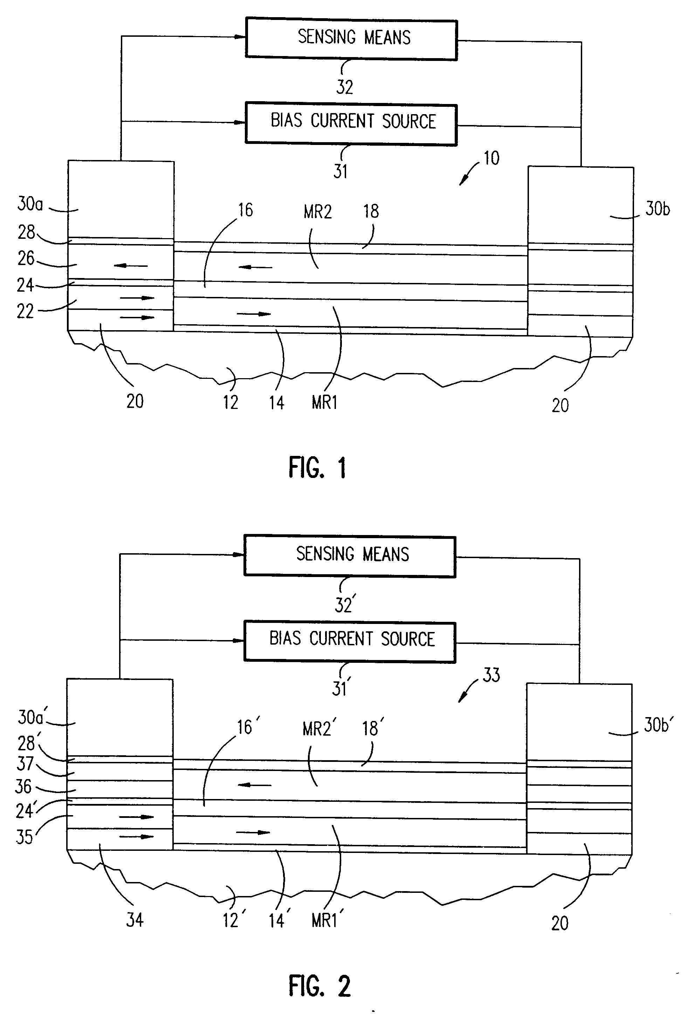

As illustrated in Fig. 1, a dual element magnetoresistive (MR) sensor **10** embodying the invention is deposited on an insulating substrate **12**. Sensor **10** has a central active region separating two passive end regions. The central region comprises the following layers deposited successively and defined by ion-milling and photolithography: a seed layer **14**, a first MR element **MR1** of soft ferromagnetic material, a high-resistivity conductive spacer layer **16**, a second MR element **MR2** of soft ferromagnetic material, and a protective overcoat layer **18**. Spacer layer **16** completely separates **MR1** and **MR2**.

Thereafter, the passive end regions are formed. Each comprises a thin layer **20** of soft ferromagnetic material substantially equal in thickness to that of **MR1** deposited on substrate **12**. Then, a layer **22** of antiferromagnetic material is deposited, followed by a thin layer **24** of a nonmagnetic metallic material. Next, a layer **26** of a hard magnetic bias material is deposited. The term "hard bias material" as herein used connotes a material, such as permanent magnet material, having high coercivity and high magnetization. A layer **28** of suitable material is deposited between layer **26** and conductor leads **30a, 30b** to reduce the resistance of the leads. The layers **20-30** are deposited so as to abut the MR elements **MR1** and **MR2** at the track edges of the central active region of the sensor **10**.

According to a preferred embodiment of dual element MR sensor **10** for use in a disk file (not shown), substrate **12** comprises Al₂O₃; seed layer **14** is of Ta up to 40**Å** thick; elements **MR1** and **MR2** are of NiFe from 50**Å** to 300**Å** thick; high-resistivity conductive spacer layer **16** is of beta-phase Ta from 60**Å** to 1000**Å** thick; protective overcoat layer **18** is of Ta from 20**Å** to 40**Å**; layer **20** is of NiFe from 50**Å** to 300**Å** thick; layer **22** is of NiMn or NiO from 300**Å** to 600**Å** thick; layer **24** is of Cr from 50**Å** to 100**Å** thick; layer **26** is of CoPtCr from 200**Å** to 600**Å** thick; layer **28** is of TiW about 100**Å** thick; and conductor leads **30a, 30b** are of Ta up to about 1,000**Å** thick.

According to features of an embodiment, Cr layer **24** not only serves as a seed layer for the CoPtCr layer **26** but also provides magnetic decoupling between the NiMn layer **22** and the CoPtCr layer. MR element **MR1** is exchange coupled to the NiFe layer **20** to provide longitudinal exchange bias coupling of a magnitude of the order of at least 20 Oersteds (Oe). The hard bias CoPtCr layer **26** preferably has a coercivity above 500 Oe. MR element **MR2** is longitudinally biased by the hard bias CoPtCr layer **26**. Since NiMn has a blocking temperature of about 400°C, the direction of the exchange field is set during fabrication of sensor assembly 10 by annealing the NiFe/NiMn bilayer **20,22** at about 240°C in a magnetic field oriented along the axis of the sense current, the direction of which is shown in Fig. 1. The direction of magnetization of the hard bias CoPtCr layer **26** is set at room temperature after fabrication of sensor **10** by applying a large external magnetic field along the axis of the sense current. The direction of the longitudinal bias and hence the orientation direction of the magnetization in MR elements **MR1** and **MR2** can be set antiparallel to each other by applying the external fields for the bilayer **20,22** in opposite directions along the axis of the sense current. Antiparallel orientation is especially suitable for narrow track width applications.

Photolithography and ion milling techniques, known to those skilled in the art and forming no part of the present invention, are used to deposit the respective layers and to provide the above-described abutting junctions between the layers of the central active region and passive end regions and also to provide track edges which are as vertical as possible.

Note that the stray magnetic field from bias layer **20** at the junction between layer **20** and **MR1** and the stray magnetic field from hard bias layer **26** at the junction between layer **26** and **MR2** are additive. This magnetostatic coupling helps stabilize the antiparallel magnetization orientation of **MR1** and **MR2**. The magnetization times thickness value of the exchange bias NiFe layer **20** is preferably at least equal to that of the MR element **MR1**. The magnetization times thickness value of the hard bias CoPtCr layer **26** is preferably at least equal to that of the MR element **MR2.** Also, the resistivity of the high resistivity conductive spacer layer **16** should be at least about 100 micro-ohm-cm to avoid excessive loss of sense current due to shunting.

While a preferred embodiment has been described, it should be noted that spacer layer **16** may, if desired, be of Niobium nitride, Ta nitride, Ta oxide, Ti nitride, or NiCrO; but if these materials are used, they should be covered by a thin Ta seed layer to avoid degradation of the MR coefficient of MR element **MR2**. Also, hard bias layer **26** may, if preferred, be of other hard bias materials, such as CoCrTa or CoSm. Finally, the nonmagnetic metallic Cr thin layer **24** may, if preferred, be of a TiW or TaW alloy; and leads **30a,30b** may, if preferred, be of TiW/Ta or Ta/Au/Ta.

It will thus be seen that the sensor **10** according to this embodiment desirably permits the orientation of the longitudinal bias field and hence the orientation of the magnetization of elements **MR1** and **MR2** to be set independently. For example, with an antiparallel orientation of elements **MR1, MR2,** the sensor is especially suitable for sensing in applications employing very narrow track widths, such as less than 1 micron.

A bias current source **31** and sensing means **32** are interposed in parallel between leads **30a,30b**. The voltage generated when the dual element head of sensor **10** senses an analog signal from a magnetic storage disk (not shown) will be sensed by sensing means **32**. Note that, for this dual element sensor, only one electrical connection is required to each of the leads **30a,30b**. Note, also, that the bias currents provide bias angles of magnitude ϑ which, for the antiparallel configuration shown in Fig. 1, will be directed downwardly into the plane of the paper for **MR1** and upwardly in the opposite direction from the plane of the paper for **MR2**. The currents will split equally between the elements **MR1** and **MR2**, and angle ϑ will be equal for both MR elements.

According to a variation of this embodiment and as shown in Fig. 2, dual element MR sensor **33** differs from sensor **10** only in that a bilayer **34,35** of NiFe/NiO replaces the NiFe/NiMn bilayer **20,22** and a bilayer **36,37** of NiFe/NiMn replaces the hard bias CoPtCr layer **26** of Fig. 1. Accordingly, the same reference numerals but primed are used in Fig. 2 to denote elements which may be identical with those of Fig. 1. Since NiMn and NiO have blocking temperatures of approximately 400°C and 200°C, respectively, the NiMn layer **37** is annealed first at a temperature of about 240°C to set its magnetic exchange bias direction to cause the direction of MR element **MR2** to be similarly set; and thereafter the NiO layer **35** is annealed at a temperature of about 160°C to set its magnetization direction and thereby that of MR element **MR1** to be similarly set antiparallel to that of the NiMn layer **37**. Also, with this variation, the Cr layer **24** decouples the NiFe/NiO layer **34**,**35** from the NiFe/NiMn bilayer **36**,**37**; and the NiMn layer **37** of the bilayer **36**,**37** should be nearest the leads **30a,30b** because it is conductive and will help establish connection of these leads to the MR element.

This configuration, which employs only exchange bias layers to achieve the antiparallel stabilization, is desirable for applications using very thin MR sensor elements (e.g., <100**Å**) because it is difficult to obtain the desired coercivity with thin hard bias materials. However, unless intended for use with very thin MR elements, the embodiment first described is preferable because the configuration according to this variation requires annealing at two temperatures, rather than one.

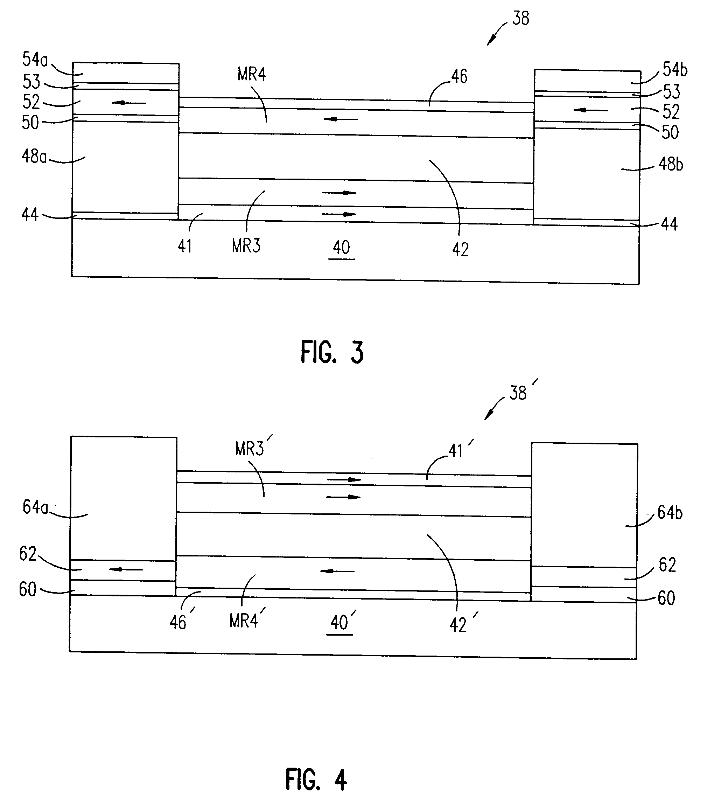

As illustrated in Fig. 3, the dual element MR sensor **38** according to this embodiment comprises a substrate **40**, preferably of Al₂O₃, on which are deposited in the central region in successive layers by photolithography: a layer **41** of exchange bias material; an MR element **MR3** of soft magnetic material, a high-resistivity conductive spacer layer **42**, a second MR element **MR4** of soft ferromagnetic material, and a protective overcoat layer **46**. Spacer layer **42** completely isolates **MR3** and **MR4**.

In the passive regions to either side of the layers just described are deposited on substrate **40** in successive layers: a layer **44** between the substrate and conductive leads **48a,48b**, to reduce the resistance of the leads; a seed layer **50**; a layer **52** of a hard magnetic bias material; and a layer **53** between layer **52** and leads **54a,54b** to reduce the resistance of these leads.

Exchange layer **41** preferably is of NiO or a NiO alloy between 200**Å** and 400**Å** thick. The thicknesses and compositions of the layers **MR3**, **42**, **MR4** and **46** in the central active region of the MR sensor 38 are preferably the same as those for layers **MR1, 16**, **MR2** and **18**, respectively, of the embodiment of Fig. 1. Again, if the spacer layer **42** is other than Ta, a thin Ta seed layer (not shown) should be deposited on the spacer layer before deposition of layer **MR4**. Similarly, the thicknesses and compositions of layers **44** and **53** are preferably the same as those for layer **28**, and of layers **50** and **52** the same as for layers **24** and **26**, respectively; and the combined thickness as well as the composition for conductor leads **48** and **54** is the same as for leads **30** in the embodiment of Fig. 1. However, if preferred, alternative compositions may be substituted, such as those specified for the corresponding layers of the Fig. 1 embodiment.

According to features of the invention, MR element **MR3** is exchange biased with the NiO or NiO alloy layer **41** to provide an exchange coupling of the order of about 10 Oe. NiO is preferable over NiMn and FeMn because it is an insulator and hence does not shunt sensing current. If the exchange coupling between the NiO layer **41** and MR element **MR3** is too strong, the NiO may be alloyed with another element such as Al to reduce the exchange field to a desired magnitude. Spacer layer **42** has a resistivity of at least 100 micro-ohm-cm. It acts as a gap, the thickness of which determines the linear density of the data stored in the track.

The embodiment of Fig. 4 differs from that of Fig. 3 in that the layers in the central active region of the MR sensor **38'** are deposited in reverse order on substrate **40'** and hence are denoted by similar reference numerals but primed. The passive end regions differ, however, from those in Fig. 3, in that they comprise the following layers successively deposited on the substrate **40'**: a seed layer **60**, a hard magnetic bias layer **62** and conductor leads **64a,64b**.

As in the embodiment of Fig. 1, the layer **60** is preferably of Cr. MR element **MR3'** is exchange coupled to the NiO or NiO alloy layer **41'** to provide longitudinal exchange bias coupling of a magnitude of the order of 10 Oe. MR element **MR4'** is longitudinally biased by the hard bias layer **62**. For the embodiments of Figs 3 and 4, the direction of the exchange field is set during fabrication by annealing at 160°C in a magnetic field applied along the sense current axis.

The embodiments of Figs. 3 and 4 thus differ from that discussed in connection with Fig. 1 in that in Figs. 3 and 4, one MR element (**MR4** or **MR4'**) is longitudinally biased by a hard bias layer, such as **52** or **62**, respectively; and the other MR element (**MR3** or **MR3'**) is longitudinally biased by exchange coupling with an antiferromagnetic NiO or NiO alloy layer **41** or **41'**, respectively, that extends across the entire central region of the sensor. Also, only the magnetization times thickness value of the hard bias layer **52** (Fig. 3) or **62** (Fig. 4) need be at least equal to that of MR element **MR4** or **MR4'**, respectively. However, as before, the directions of magnetization of **MR3'** and **MR4'** are made antiparallel.

In the embodiment of Fig. 3, the MR element **MR4** desirably is encapsulated and protected by the protective overcoat layer **46** during further processing. In the embodiment of Fig. 4, since NiO is an insulator, the width of the NiO layer **41'** desirably defines the track width independent of the alignment of the leads **54a,54b** with the MR elements.

It should be noted that the configurations of the embodiments above described may be used with MR sensors that are shielded or unshielded. If the MR sensor is shielded, spacer layer **16, 16'**, **42** or **42'** is relatively thin, whereas if the sensor is unshielded, the thickness of said layer is controlled by resolution requirements.

While the invention has been particularly shown and described with reference to preferred embodiments thereof, it will be understood by those skilled in the art that various changes in form and details may be made therein without departing from the spirit and scope of the invention. Accordingly, the MR sensor configurations herein disclosed are to be considered merely as illustrative and the invention is to be limited only as specified in the claims.

## Claims

1. A dual element magnetoresistive (MR) sensor comprising:
two MR elements separated by a high resistivity conductive spacer layer;
a hard bias layer abutting one of said MR elements at each of its track edges and having a magnetization times thickness value substantially matched to that of said one MR element to bias said one MR element in one longitudinal direction; and
an exchange bias layer in contact with the other of said MR elements to bias by exchange coupling said other MR element in an opposite longitudinal direction to achieve magnetic stabilization between said MR elements.

2. A MR sensor as claimed in claim 1, wherein the resistivity of the spacer layer is above about 100 micro-ohm-centimeter to ensure against excessive loss of sense current due to shunting.

3. A MR sensor as claimed in either of claims 1 or 2, wherein said exchange bias layer abuts said other MR element at each of its track edges and has a magnetization times thickness value substantially matched to that of said other MR element.

4. A MR sensor as claimed in any preceding claim, wherein said exchange bias layer extends from one track edge to an opposite track edge of said other MR element in continuous contact with said other MR element.

5. A sensor as claimed in any preceding claim, wherein said hard bias layer abuts said one MR element at a respective track edge thereof.

6. A MR sensor as claimed in any preceding claim, wherein the exchange bias layer has continuous underlying contact with said one MR element.

7. A MR sensor as claimed in any preceding claim, wherein the exchange bias layer has continuous overlying contact with said one MR element.

8. A MR sensor as claimed in any preceding claim, including:
a pair of conductor leads for transmitting a voltage generated when the dual element MR sensor senses an analog signal; and, in combination therewith,
a bias current source connected in parallel between said conductor leads, only one electrical connection being required to each of said leads in order to provide equal bias currents to achieve equal but antiparallel bias angles for said one MR element and for said other MR element.
